# EUROPEAN PATENT APPLICATION

(11) **EP 4 768 690 A1**
(43) Date of publication of application: **01.07.2026**
(21) Application number: 25158398.5
(22) Date of filing: 17.02.2025
(51) Int. Cl.: E06B 9/40, E06B 9/42, E06B 9/50

(54) **ROLLER BLIND**

(30) Priority: 30.12.2024 US 202419005288
(71) Applicant: Sunlight Envirotech Co., Limited, Hong Kong SAR (China) (HK)
(72) Inventor: WONG, Chi Keung, Kwun Tong, Kowloon, Hong Kong (CN)
(74) Representative: Ullrich & Naumann PartG mbB

(57) **Abstract**

The present invention relates to a roller blind, comprising: a blind tube, comprising two ends and an outer surface on which a blind is attached; a mounting bracket, having two support portions attached to two ends thereof respectively for mounting the blind tube; characterized in that, at least one support portion and at least one end of the blind tube each comprises magnetic material enabling magnetic contact therebetween when the blind tube is mounted to the mounting bracket, wherein the positions of their magnetic materials are corresponding.

## Description

### FIELD OF THE INVENTION

The present invention relates to the field of the blind, more particular to a roller blind.

### BACKGROUND OF THE INVENTION

A roller blind is a commonly used item in our daily life. A roller blind comprises generally a blind tube and a mounting bracket. Usually, the mounting bracket is fixed to an architectural structure such as a wall or a ceiling, and then the blind tube is mounted on the mounting bracket by aligning engagement members arranged on the mounting bracket and the blind tube respectively.

The roller blind in the prior art presents for example the following drawbacks: it is difficult to position the blind tube on the mounting bracket during the mounting process due to the alignment of the engagement members, especially for roller blinds mounted in a location where a user can barely observe both ends of the roller blinds; the mounting of the blind tube on the mounting bracket is not sufficiently secured, such that the blind tube would disengage from the mounting bracket easily under impact. To improve the connection between the mounting bracket and the blind tube, a common approach in the prior art is to provide a tighter engagement between the respective engagement members of the mounting bracket and the blind tube. However, such approach would make the mounting process of the blind tube on the mounting bracket even more difficult. In the prior art, there is not yet a roller blind that allows the blind tube to be easily and securely mounted on the mounting bracket.

The present invention at least seeks to address issues of these problems, or at least to provide an alternative to the public.

### SUMMARY OF THE INVENTION

In order to solve the technical problems described above, according to a first aspect of the present invention, one of the embodiments of the present invention provides a roller blind, comprising:
a blind tube, comprising two ends and an outer surface on which a blind is attached;
a mounting bracket, having two support portions attached to two ends thereof respectively for mounting the blind tube;
wherein at least one support portion and at least one end of the blind tube each comprises magnetic material enabling magnetic contact therebetween when the blind tube is mounted to the mounting bracket, wherein the positions of their magnetic materials are corresponding. The blind tube is easily and securely mounted to the mounting bracket thanks to the magnetic contact between the support portion and the blind tube.

Further, at least one of the support portions comprise a support body and a support engagement member provided on the support body, and
at least one of the ends of the blind tube comprise a tube engagement member engageable with the support engagement member.

Further, the two support portions each comprises a support body and a support engagement member provided on the support body, and
the two ends of the blind tube each comprises a tube engagement member engageable with the support engagement member.

Further, one of the support engagement member and the tube engagement member comprises a protrusion, and
the other one of the support engagement member and the tube engagement member comprises a recess for receiving the protrusion.

Further, while the support engagement member comprises the protrusion, the protrusion protrudes from the support body towards the tube engagement member in a longitudinal direction of the mounting bracket, then the tube engagement member comprises the recess for receiving the protrusion.

Further, while the tube engagement member comprises the protrusion, the protrusion protrudes from the end of the blind tube, then the support engagement member comprises the recess for receiving the protrusion.

Further, the protrusion and/or the recess has/have a polygonal shape or a round shape.

Further, the magnetic materials are provided to or adjacent to the protrusion and the recess.

Further, the magnetic materials of the recess sits on the magnetic materials of the protrusion when the blind tube is mounted to the mounting bracket.

Further, the recess comprises an opening through which the protrusion can be inserted into the recess.

Further, at least one of the tube engagement members is rotatable about an axis of the blind tube.

Further, the tube engagement member is fixedly or removably connected to the blind tube.

Further, the support portion is fixedly or movably connected to the mounting bracket.

Further, the support portion is hingedly connected to the mounting bracket.

Further, the support engagement member is fixedly or movably connected to the support body.

Further, a chain drive system for winding or unwinding the blind is provided at one end of the blind tube.

The roller blind according to the present invention has at least the advantages of facilitating and, in the meantime, securing the mounting of the blind tube to the mounting bracket.

### DESCRIPTION OF THE DRAWINGS

Some embodiments of the present invention will now be explained, with reference to the accompanied drawings, in which:
Figure 1a is a perspective view of a roller blind according to a first embodiment of the present invention.
Figure 1b is a perspective view of a blind tube according to the first embodiment.
Figure 2a is a perspective view of a support portion according to the first embodiment.
Figure 2b is a front view of the support portion according to the first embodiment.
Figures 2c and 2d are side views of the support portion seen from inside and outside along the longitudinal direction of the mounting bracket respectively.
Figure 3 is a top view of the mounting bracket.
Figure 4 is a side view of the tube engagement member according to the first embodiment.
Figure 5 is a side view of the blind tube at its second end.
Figure 6a is a perspective view of the roller blind according to the first embodiment with a partial enlarged view of the first end of the blind tube.
Figure 6b is a side view of the second end of the blind tube mounted to the mounting bracket.
Figures 7a to 7d are side views of the mounting process of the blind tube at its first end.
Figure 8a is a perspective view of the roller blind according to another embodiment.
Figure 8b is a simplified side view of the mounting process of the blind tube at its first end according to another embodiment.
Figures 9a is a perspective view at one end of the roller blind according to another embodiment.
Figure 9b is a simplified side view of the mounting process of the blind tube at its first end according to another embodiment.
Figure 10a is a perspective view at one end of the roller blind according to another embodiment.
Figure 10b is a simplified side view of the mounting process of the blind tube at its first end according to another embodiment.
Figure 11 is a perspective view at one end of the roller blind according to another embodiment.
Figure 12 is a perspective view at one end of the roller blind according to another embodiment.

### DETAILED DESCRIPTION OF PREFERRED EMBODIMENTS OF THE INVENTION

The present invention is now presented by way of examples with reference to the figures in the following paragraphs. Objects, features, and aspects of the present disclosure are disclosed in or are apparent from the following description. It should be understood by one of ordinary skilled in the art that the following description is a description of exemplary embodiments only, and is not intended as limiting the broader aspects of the present disclosure, which broader aspects are embodied in the exemplary constructions.

It should be noted that, unless otherwise defined, the technical terms or scientific terms used in the embodiments of the present invention shall have the usual meanings understood by person with ordinary skills in the art to which the present invention belongs. "First", "second" and similar expression used in the embodiments of the present invention do not indicate any order, quantity or importance, but are only used to distinguish different components. "Front", "rear", "left", "right", "upper", and "lower" and other terms indicating orientation or similar terms are only described for the exemplary relative positional relationship shown in the drawings to facilitate the understanding. It does not limit the disclosed components in the present invention can only follow this specific relative positional relationship.

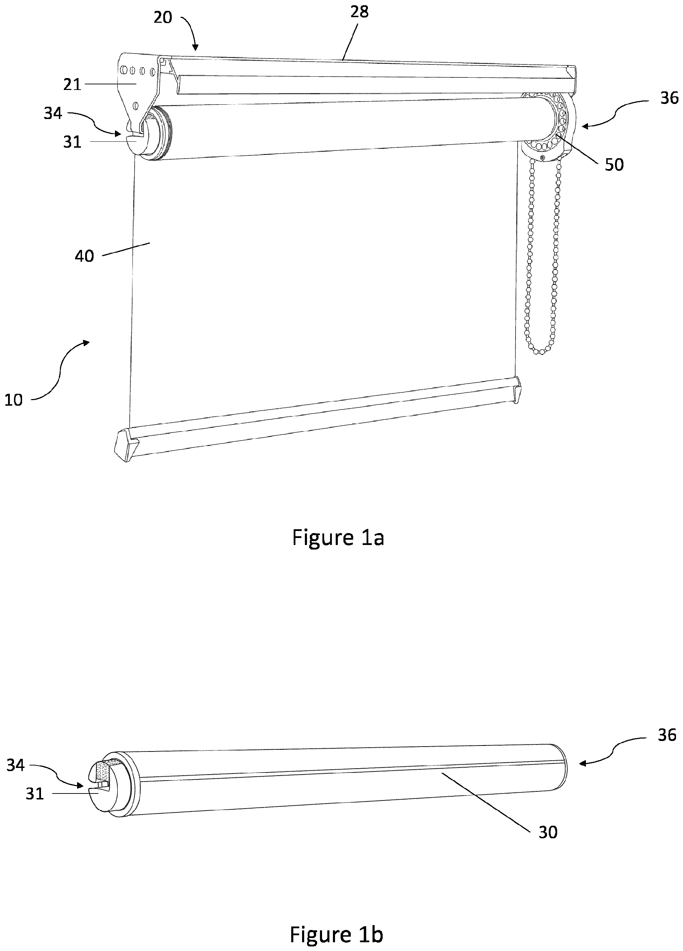

Figures 1a and 1b illustrate perspective views of a first embodiment of the present disclosure. The roller blind 10 comprises a blind tube 30 comprising a first end 34, a second end 36 and an outer surface on which a blind 40 is attached; a mounting bracket 20, having two support portions 21 attached to two ends of a main body 28respectively for mounting the blind tube 30. Each of the first and second ends 34, 36 comprises a tube engagement member 31 engageable with a respective support portion 21. In this embodiment, the magnetic contact is performed between the first end 34 of the blind tube 30 and one of the support portions 21 of the mounting bracket 20, which will be discussed in detail hereinafter. The second end 36 of the blind tube 30 is provided with a chain drive system 50 for winding or unwinding the blind 40. Moreover, the mounting bracket 20 comprises further a main body 28 which extends between the two support portions 21, thereby providing support for the two support portions 21.

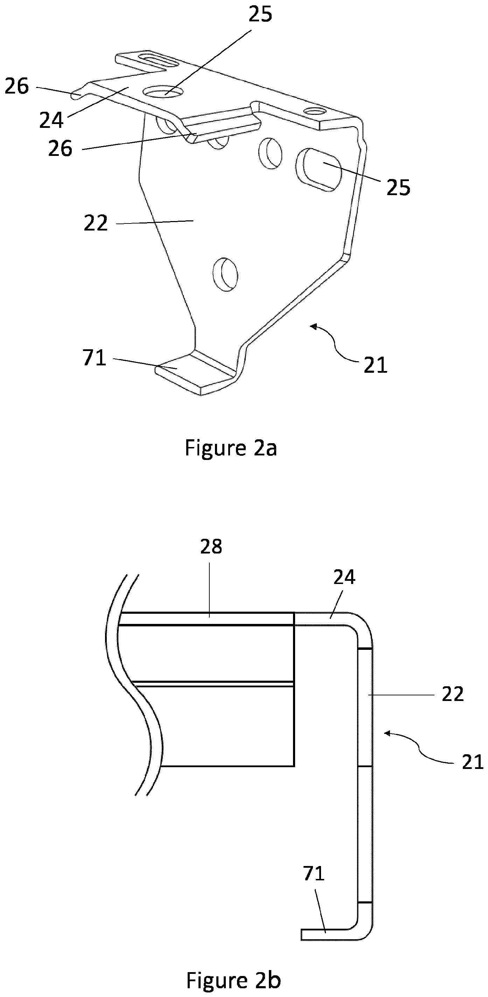

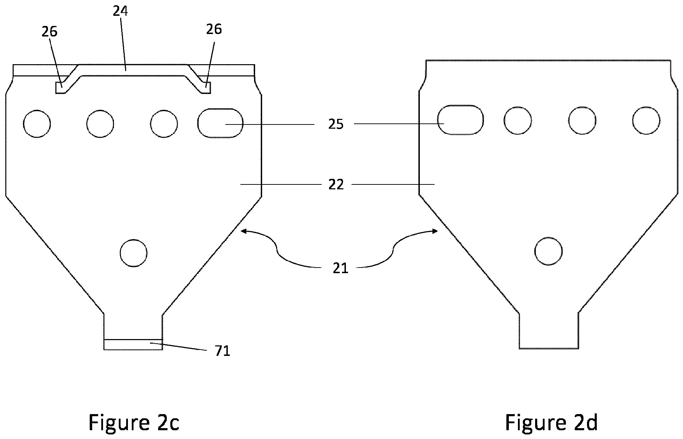

Figures 2a to 2d show the detailed structure of the support portion 21, which comprises a support body 22 and a support engagement member provided on the support body 22. The support engagement member comprises a protrusion protruding from the support body 22 in a longitudinal direction of the mounting bracket 20. In this embodiment, the protrusion is in form of a rectangular tab 71. The support portion 21 comprises magnetic material for enabling magnetic contact with the blind tube 30, in particular the tube engagement member 31. Further, in this embodiment, the rectangular tab 71 is provided with magnetic material for enabling contact with the blind tube 30. Advantageously, at least the rectangular tab 71 is made of magnetic material. By the term magnetic material, it means any material attracted by a magnet or a magnetic field. This includes ferromagnetic materials, such as iron, nickel, cobalt and alloys thereof. Preferably, the support portion 21 is a one-piece member made of magnetic metal. In this embodiment, as shown in figures 2c and 2d, the support portion 21 or rather the support body 22 comprises several through holes 25 distributed on the support body 22 in a substantially symmetric manner. These through holes 25 are for example screw holes, through which screws can be inserted to reinforce or suspend the support portion 21, which may be affixed to a wall or any other structure. The support portion 21 also comprises a connection member 24 for fixing the support portion 21 to the main body 28 of the mounting bracket 20, which is for example a steel profile. The connection member 24 protrudes in the same direction of the rectangular tab 71 and is substantially perpendicular to the support body 22. A pair of inserts 26 are arranged at two sides of the connection member 24 for engaging with the mounting bracket 20. The connection member 24 comprises also through holes 25 serving as screw holes. In this embodiment, each support portion 21 is identical in terms of shape, material and is connected to the main body 28 in a same manner. It should be understood that, in other embodiments, these support portions 21 may vary in terms of shape, materials and connection manner, and these variations are not limited to those described herewith.

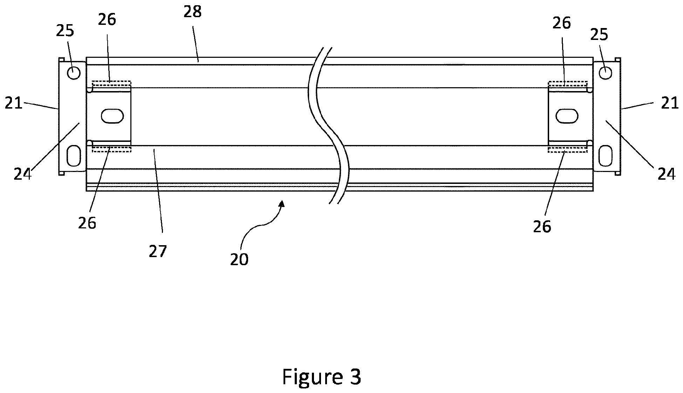

A top view of the mounting bracket 20 is shown in Figure 3. The main body 28 is provided with a mounting groove 27 extending in the longitudinal direction of the main body 28, for receiving the pair of inserts 26. The pair of inserts 26 is adapted to be securely inserted into the mounting groove 27, thereby realizing the mounting of the support portion 21. The connection manner between the connection member 24 and the main body 28 is not limited herein. It should be understood that the main body 28 is optional. In other embodiments, the two support portions 21 could be mounted to a structure for example by means of screws without the need of the main body 28. In this regard, the two support portions define the mounting bracket.

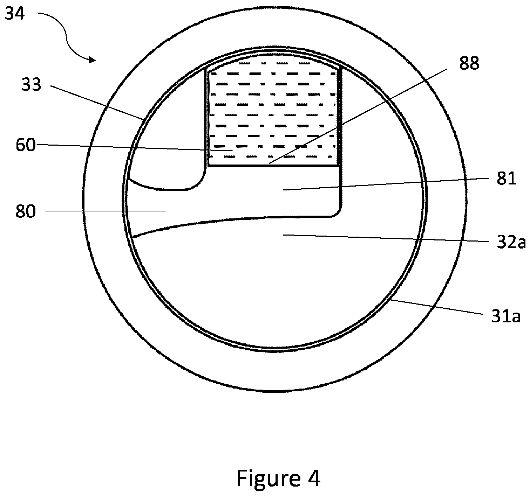

Figure 4 shows the detailed structure of the first end 34 of the blind tube 30 in a side view. It can be seen that the blind tube 30 at its first end 34 comprises a first tube engagement member 31a having a substantially round-shaped surface 32a on which a recess is formed. In this embodiment, the recess is in form of a rectangular recess 81 which is configured and dimensioned to receive the rectangular tab 71. The rectangular recess 81 is substantially centered on the surface 32a and comprises a longitudinal side 88 which is destined to contact the rectangular tab 71. The longitudinal side 88 is equipped with a magnet 60, which attracts the rectangular tab 71 during the mounting process of the blind tube 30. In this embodiment, the magnet 60 extends over the whole length of the longitudinal side 88. Furthermore, the magnet 60 extends axially in the plane defined by the surface 32a to the edge 33 of the surface 32a, thus providing an optimal magnetic effect. The rectangular recess 81 comprises an opening 80 through which the rectangular tab 71 can be inserted into the rectangular recess 81. Preferably, the opening 80 is provided on a transverse side of the rectangular recess 81, thereby facilitating the entry of the rectangular tab 71, which will be described further hereinafter. The first tube engagement member 31a is rotatable about an axis of the blind tube 30, thereby maintaining the contact between the rectangular tab 71 and the rectangular recess 81 during the winding and unwinding of the blind 40. Moreover, the tube engagement member 31 is removably connected to the blind tube 30. In other embodiments, the tube engagement member 31 is fixedly connected to the blind tube 30.

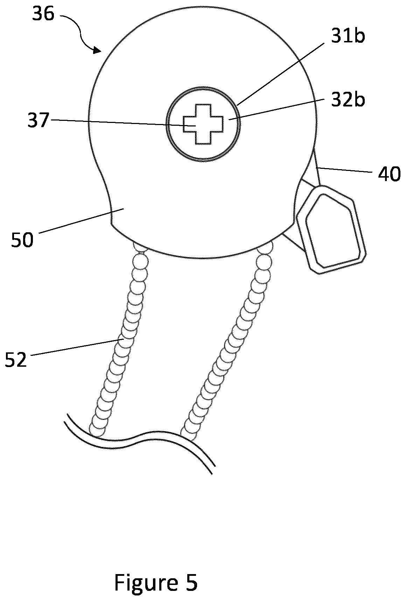

Figure 5 shows the detailed structure of the second end 36 of the blind tube in a side view. Similar to the first end 34, the blind tube 30 at its second end 36 comprises a second tube engagement member 31b having a round-shaped surface 32b. In contrast to the first end 34, at the second end 36, a recess 37 is formed on the surface 32b. It is important to note that the recess 37 in cruciform is an example only. The recess 37 could be in any shape. The recess 37 is also configured and dimensioned to engage the support portion 21, or more specifically to receive the rectangular tab 71. The recess 37 is substantially centered on the surface 32b. In this embodiment, no magnetic contact is performed at the second end 36. However, the structure of the second end 36 can be adapted to enable a magnetic contact. For example, a magnet is provided on the inner wall of the recess 37 destined to be contacted by the rectangular tab 71. The chain drive system 50 is a manual chain drive system, in which the user controls the winding and unwinding of the roller blind 10 by pulling the chain 52. In other embodiments, the chain drive system 50 can be motorized.

It is important to note that the second tube engagement member 3 1b in Figure 5 is for illustrative purposes only. In certain embodiments, the second tube engagement member 31b is identical to the first tube engagement member 31a as previously described.

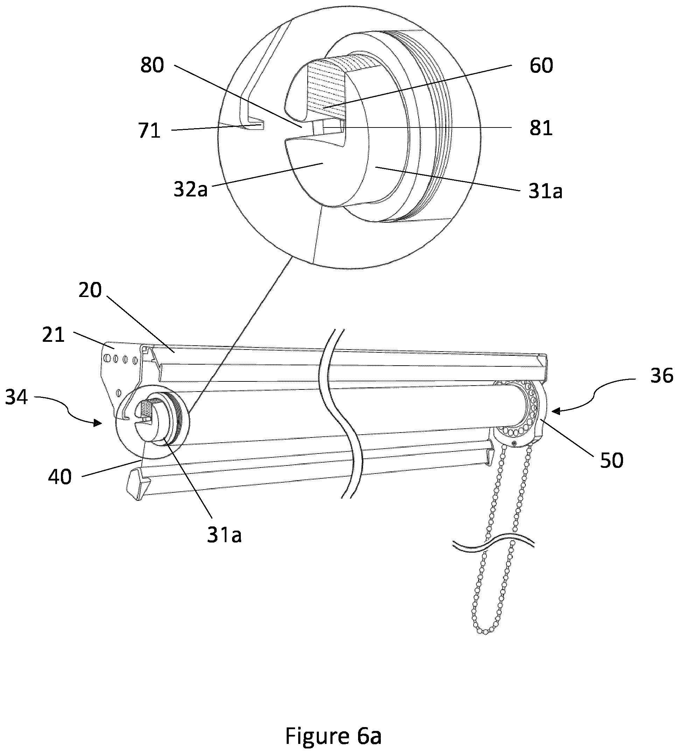

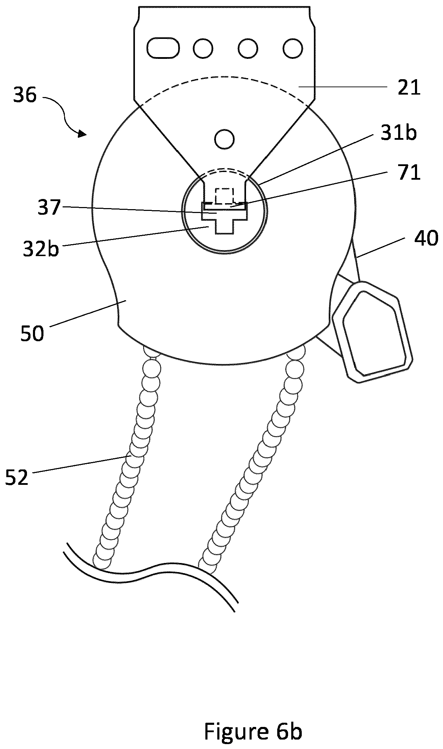

Figure 6a and 6b show the first step of the mounting process for the roller blind 10 in this embodiment. The first step is to engage the second tube engagement member 31b with the rectangular tab 71 at the second end 36, which comprises: aligning the rectangular tab 71 with the recess 37, and inserting the rectangular tab 71 into the recess 37. Preferably, the blind tube 30 has a length slightly smaller than the distance between the two support bodies 22 for being mounted therebetween. By the end of the first step, the first end 34 remains free and the blind tube 30 is nearly parallel to the main body 28 of the mounting bracket 20, as shown in figure 6a.

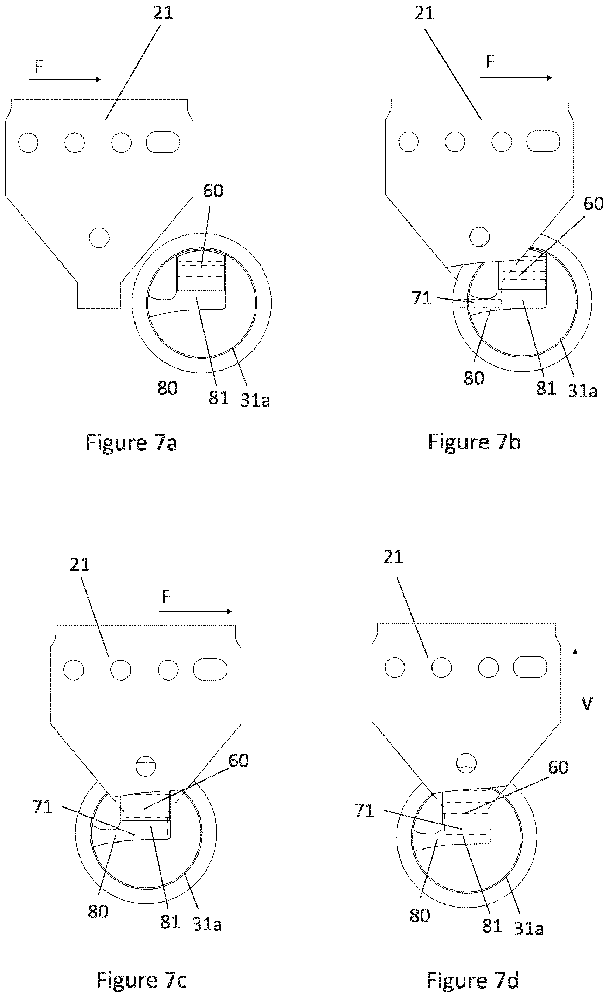

Figures 7a to 7d show the second step of the mounting process for the roller blind 10 in a side view at the first end 34. A part of the support portion 21 superposed with the first tube engagement member 31a is outlined with dashed lines. This is only illustrative and does not indicate any change in shape or material. The second step is to engage the first tube engagement member 31a with the rectangular tab 71 at the first end 34, which comprises: aligning the rectangular tab 71 with the opening 80, as shown in figure 7b; inserting the rectangular tab 71 into the rectangular recess 81 along the direction F, as shown in figure 7c, thereby allowing the magnetic contact, or more specifically the magnetic attraction, between the rectangular tab 71 and the magnet 60; and displacing the rectangular tab 71 along the direction V within the rectangular recess 81, as shown in figure 7d. By the end of the second step, the magnet 60 sits on the rectangular tab 71 in a fitted manner. The magnetic contact between the rectangular tab 71 and the magnet 60 facilitates the mounting process and provides a more secure mounting of the blind tube 30 to the support portion 21. It should be understood that the disassembly process is carried out in a reversed manner of the mounting process. The magnetic contact between the blind tube 30 and the support portion 21 facilitates the alignment between the support engagement member and the tube engagement member 31, thereby facilitating the mounting process of the blind tube 30 to the mounting bracket 20.

In other embodiments, the magnetic contact is performed at both the first end 34 and the second end 36, thereby providing even an enhanced secure mounting. In other embodiments, the selection of magnetic materials can be different. For example, the rectangular tab 71 comprises a magnet and the longitudinal side 88 of the rectangular recess 81 comprises magnetic metal. Moreover, the steps of the mounting process can be reverse in other embodiments, for example, the first step is to engage the tube engagement member at the first end 34 with the support portion 21 and the second step is to engage the tube engagement member at the second end 36 with another support portion 21.

In some embodiments, the rectangular tab 71 and the recess 81 in the embodiments in figures 1-7 are interchangeable. That means, the recess 81 can be provided to the support portion; and the rectangular tab 71 is provided on the surface of the tube engagement member. The operational mechanism remains essentially the same as previously described and will not be reiterated for brevity and clarity.

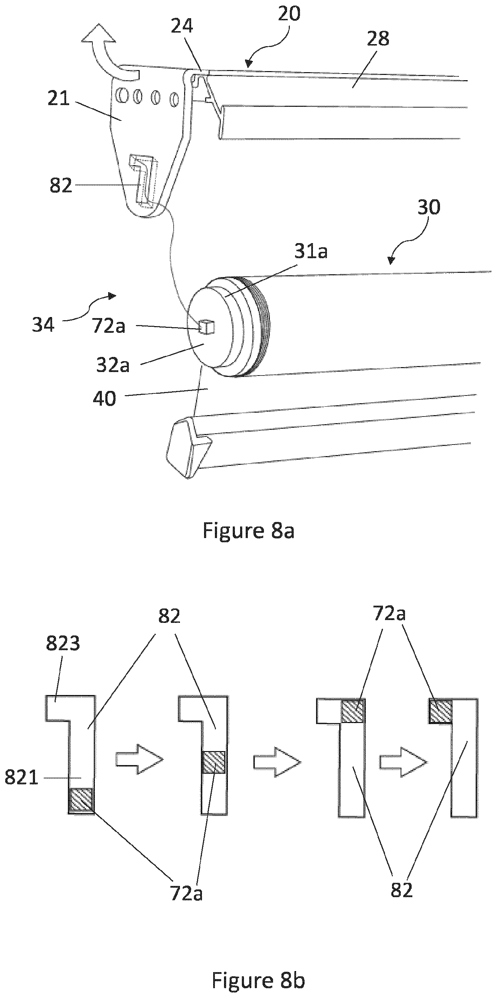

Figures 8a and 8b illustrate another embodiment of the present invention. The distinction between the first embodiment and the embodiment in figures 8a-8b lies in the configurations of the support portion 21 and the first tube engagement member 31a. For purposes of illustration, only views at the first end 34 are shown in the embodiment in figures 8a-8b. It should be understood that the configuration at the second end 36 can be identical to those at the first end 34 in the present embodiment or in other embodiments, which is not repeatedly described hereinafter.

Figure 8a shows the perspective view of the blind tube 30 and the mounting bracket 20 at the first end 34. The support portion 21 comprises a support body 22 and a support engagement member provided on the support body 22. The support engagement member comprises a recess which is a recess 82 resembles the number "7" in this embodiment. However, it should be understood that number "7" is an example only and shall not be construed as a limitation to the present invention. Figures 8a also shows that the first tube engagement member 31a has a substantially round-shaped surface 32a on which a protrusion 72a is formed. In this embodiment, the protrusion 72a is cubic; however, in other embodiments, the protrusion can be of any shape as long as it can fit into the recess 82. Similarly, the recess 82 does not need to be in the shape of the number "7"; it should be able to accommodate the protrusion 72a to establish the mounting between the blind tube and the mounting bracket. Any shape that fulfills this function would also fall within the scope of the present invention. In the embodiment shown in figured 8a and 8b, the recess 82 is adapted to receive the protrusion 72a during the mounting process, and their cooperation is shown in figure 8b, which is a side view thereof. The recess 82 has two sections which are a longitudinal section 821 and a transverse section 823 connecting to the longitudinal section 821 thus forming the number "7". Firstly, inserting the protrusion 72a into the bottom part of the longitudinal section 821 of the recess 82. This is followed by sliding the protrusion 72a upwards along the longitudinal section 821 until it reaches the transverse section 823 where the cubic protrusion 72a is maintained after the mounting process. Preferably, the cubic protrusion72a comprises a magnet (which is not shown) and the recess 82 comprises magnetic metal so as to realize a magnetic contact at the first end 34. More preferably, the whole protrusion 72a is a magnet. In other embodiments, the whole support portion 21 is a one-piece structure made of magnetic metal. In some embodiments, the recess 82 can extend through the entire thickness of the support body 22 and thereby forming a through hole. In some embodiments, the support body 22 is movably connected to the mounting bracket 20 via the connection member 24. In some embodiments, the support body 22 is hingedly connected to the connection member 24 for releasing the support body 22 during the mounting process of the blind tube 30. In some embodiments, the recess 82 and the protrusion 72a in the embodiment in figures 8a and 8b are interchangeable. That means, the recess 82 can be provided on the surface of the tube engagement member; and the protrusion 72a is provided to the support portion.

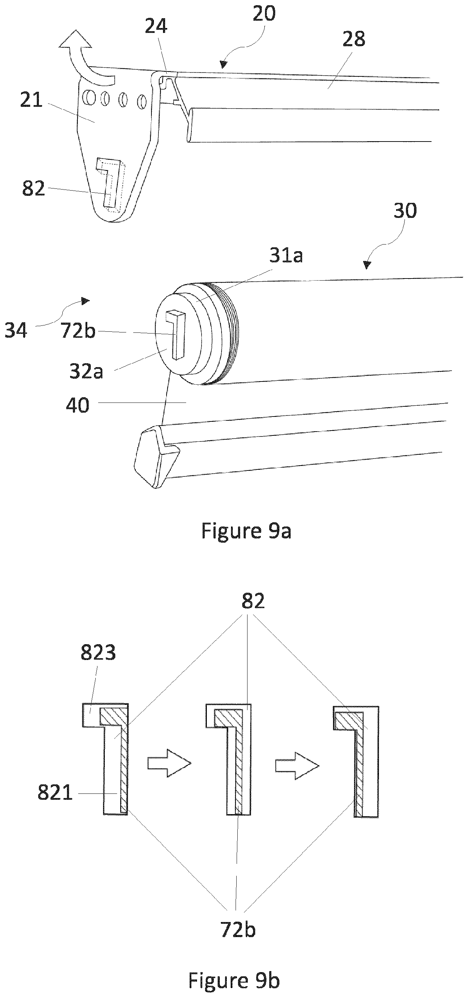

Figures 9a and 9b illustrate another embodiment of the present invention. Components identical to those described in previous embodiments are labeled with the same reference numerals and will not be reiterated. The key difference between the embodiment in figures 9a-9b and that in figures 8a-8b is the design of the first tube engagement member 31a at the first end 34 of the blind tube 30. In Figures 9a-9b, a protrusion 72b shaped like the number "7" replaces the protrusion 72a which is in a cubic in figures 8a-8b, and is situated on the surface 32a of the first tube engagement member 31a. In Figure 9b, the protrusion 72b is designed to be movable transversely within the recess 82, shaped like the number "7", and ultimately settles securely within the recess 82. Both the protrusion 72b and the inner side wall of the recess 82 contain magnetic materials to facilitate magnetic contact. Preferably, the protrusion 72b is a magnet.

In other embodiments, the recess 82 can be configured in different shapes, such as an I shape or T shape. Correspondingly, the protrusion 72b is designed to match the shape of the I or T-shaped recess 82, allowing the protrusion 72b to be received within the recess 82.

Alternatively, in other embodiments, the recess 82 is located on the surface of the tube engagement member, while the protrusion 72b is situated on the support portion of the mounting bracket. The operational mechanism remains essentially the same as previously described and will not be reiterated for brevity and clarity.

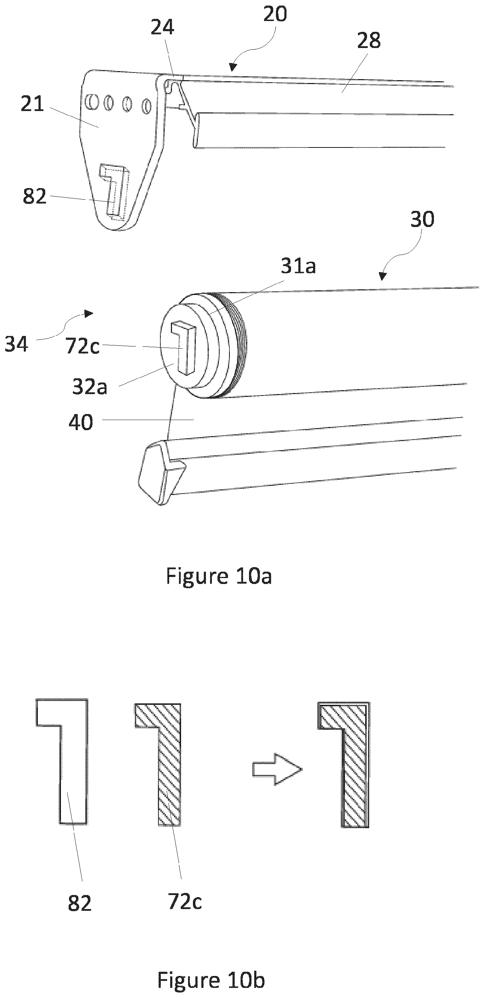

Figures 10a and 10b illustrate a variation of the protrusion 72b shown in figures 9a-9b. In the embodiment shown in figures 10a-10b, the protrusion 72c is notably larger than the protrusion 72b of figures 9a-9b. It can be seen that the protrusion 72c nearly fills the entire internal space of the recess 82, which disables the displacement of the protrusion 72c within the recess 82. Similar to the embodiments in figures 9a-9b, the protrusion 72c comprises magnetic material, and preferably is a magnet, and the recess 82 is made of magnetic metal. In other embodiments, the recess 82 has other suitable shapes, such as a C shape, a Z shape, with the protrusion tailored to fit these shapes accordingly. Preferably, the protrusion 72c is snugly engageable with the recess 82.

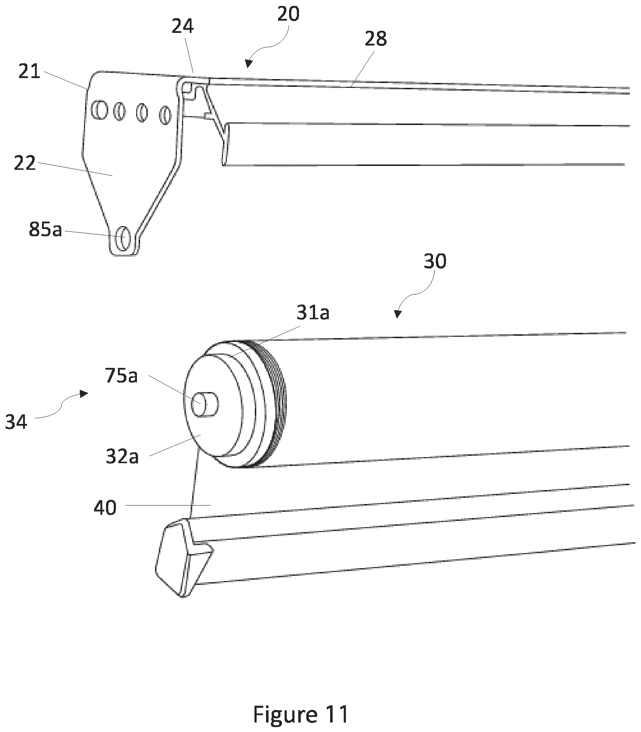

Figure 11 illustrates another embodiment of the present invention. In this embodiment a protrusion 75a, in circular shape, is formed on the surface 32a of the first tube engagement member 31a and accordingly a recess 85a, in circular shape, is formed on the support body 22. Preferably, the protrusion 75a is made of magnet and the recess 85a comprises magnetic material so as to enable a magnetic contact therebetween. Preferably, the support body 22 is hingedly connected to the connection member 24. And during the mounting process, the support body 22 is configured to first swing away from the blind tube, and then configured to swing towards the blind tube while aligning the protrusion 75a with the recess 85a. The first tube engagement member 31a is preferably rotatable about the axis of the blind tube 30. Advantageously, the surface 32a other than the protrusion 75a comprises also magnetic material and the magnetic contact is also realized thereat, thereby limiting the rotation of the first tube engagement member 31a by providing an enhanced magnetic contact between first the tube engagement member 31a and the support portion 21. Advantageously, the protrusion 75a is movable with respect to the surface 32a. For example, the protrusion 75a is axially and/or resiliently movable along its axle direction such that when mounting the mounting bracket to the blind tube, or vice versa, the protrusion 75a can be first retracted to ease the mounting, then relaxed until the protrusion 75a meets the recess 85a. More advantageously, the protrusion 75a is removably connected to the surface 32a.

In other embodiments, the surface 32a can be provided with one circular protrusion and one circular recess, while the support portion 21 can be provided with one circular recess and one circular protrusion positioned to correspond to the circular protrusion and the circular recess of the surface 32a respectively. In some embodiments, the surface 32a can be provided with different number and shape of protrusion and recess, in any combination, while the support portion 21 can be provided with the corresponding elements matching with the protrusion(s) and/or recess(es) provided on the surface 32a.

The shape of the recess and protrusion in this embodiment is for illustration only. It should be understood that it can be of any shape, as long as these components can collaboratively interact with each other to enable the mounting process, these components fall within the gist of the present invention.

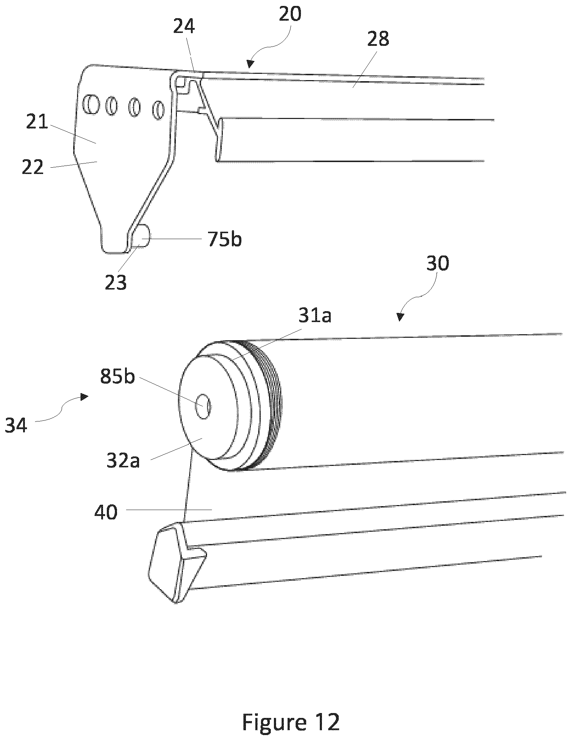

Figure 12 illustrates a variation of the protrusion 75a and circular recess 75b shown in figure 11. In figure 12, it can be seen that the support portion 21 comprises a support engagement member 23 which is connected to the support body 22. The support engagement member 23 comprises a protrusion 75b in circular shape while the first tube engagement member 31a comprises a recess 85b, in circular shape, on the surface 32a positioned corresponding to the position of the circular protrusion 75b. In this embodiment, the recess 85b comprises a magnet arranged on the inner side wall thereof and the protrusion 75b is made of magnetic metal so as to enable a magnetic contact therebetween. And the mounting process in this embodiment is similar to that of the precedent embodiment. In some embodiments, at least a portion of the first tube engagement member 31a is made of magnet. Alternatively, the entire protrusion 75b is a magnet and the recess 85b comprises magnetic metal. Advantageously, the support engagement member 23 is movably connected to the support body 22. For example, the support engagement member 23 is axially and/or resiliently movable along its axle direction such that when mounting the mounting bracket to the blind tube, or vice versa, the support engagement member 23 can be first retracted to ease the mounting, then relaxed until the support engagement member 23 meets the recess 85b. More advantageously, the support engagement member 23 is removably connected to the support body 22.

In other embodiments, the support engagement member 23 comprises two circular protrusions of either the same or different sizes. Correspondingly, the first tube engagement member 31a comprises two circular recesses which are designed for receiving the two circular protrusions individually. Preferably, magnetic contact is realized between both pairs of protrusions and recesses.

The above-described shall not be interpreted to be restricted by the examples or figures only. It is to be expressly understood, however, that such modifications and adaptations are within the scope of invention in this aspect. For instance, features illustrated or described as part of one embodiment can be used on another embodiment to yield a still further embodiment. Thus, it is intended that the present disclosure cover such modifications and variations and their equivalents.

## Claims

1. A roller blind, comprising:
a blind tube, comprising two ends and an outer surface on which a blind is attached;
a mounting bracket, having two support portions attached to two ends thereof
respectively for mounting the blind tube;
**characterized in that**,
at least one support portion and at least one end of the blind tube each comprises magnetic material enabling magnetic contact therebetween when the blind tube is mounted to the mounting bracket, wherein the positions of their magnetic materials are corresponding.

2. The roller blind according to claim 1, wherein at least one of the support portions comprise a support body and a support engagement member provided on the support body, and
at least one of the ends of the blind tube comprise a tube engagement member engageable with the support engagement member.

3. The roller blind according to claim 2, wherein the two support portions each comprises a support body and a support engagement member provided on the support body, and
the two ends of the blind tube each comprises a tube engagement member engageable with the support engagement member.

4. The roller blind according to claim 2, wherein one of the support engagement member and the tube engagement member comprises a protrusion, and
the other one of the support engagement member and the tube engagement member comprises a recess for receiving the protrusion.

5. The roller blind according to claim 4, wherein while the support engagement member comprises the protrusion, the protrusion protrudes from the support body towards the tube engagement member in a longitudinal direction of the mounting bracket, then the tube engagement member comprises the recess for receiving the protrusion.

6. The roller blind according to claim 4, wherein while the tube engagement member comprises the protrusion, the protrusion protrudes from the end of the blind tube, then the support engagement member comprises the recess for receiving the protrusion.

7. The roller blind according to claim 4, wherein the protrusion and/or the recess has/have a polygonal shape or a round shape.

8. The roller blind according to claim 4, wherein the magnetic materials are provided to or adjacent to the protrusion and the recess.

9. The roller blind according to claim 4, wherein the magnetic materials of the recess sits on the magnetic materials of the protrusion when the blind tube is mounted to the mounting bracket.

10. The roller blind according to claim 9, wherein the recess comprises an opening through which the protrusion can be inserted into the recess.

11. The roller blind according to claim 4, wherein at least one of the tube engagement members is rotatable about an axis of the blind tube.

12. The roller blind according to claim 4, wherein the tube engagement member is fixedly or removably connected to the blind tube.

13. The roller blind according to claim 4, wherein the support portion is fixedly or movably connected to the mounting bracket.

14. The roller blind according to claim 4, wherein the support engagement member is fixedly or movably connected to the support body.

15. The roller blind according to claim 4, wherein a chain drive system for winding or unwinding the blind is provided at one end of the blind tube.
